# EUROPÄISCHE PATENTSCHRIFT

(11) **EP 4 013 568 B1**
(45) Veröffentlichungstag und Bekanntmachung des Hinweises auf die Patenterteilung: **14.02.2024**
(21) Anmeldenummer: 20747355.4
(22) Anmeldetag: 23.07.2020
(51) Int. Cl.: B23K 37/04, B23K 37/053, B23Q 1/76, B23Q 3/10, B23Q 3/04

(54) **WERKSTÜCKABSTÜTZUNG UND VERFAHREN ZUR EINRICHTUNG UND ZUM BETRIEB EINER WERKSTÜCKABSTÜTZUNG**
WORKPIECE SUPPORT AND METHODS FOR SETTING UP AND OPERATING A WORKPIECE SUPPORT
SUPPORT DE PIÈCE ET PROCÉDÉS DE MISE EN PLACE ET DE FONCTIONNEMENT D'UN SUPPORT DE PIÈCE

(30) Priorität: 16.08.2019 DE 102019122074
(43) Veröffentlichungstag der Anmeldung: 22.06.2022
(73) Patentinhaber: TRUMPF Werkzeugmaschinen SE + Co. KG, 71254 Ditzingen (DE)
(72) Erfinder: SCHOPF, Ralf, 71254 Ditzingen (DE)
(74) Vertreter: Trumpf Patentabteilung
(86) Internationale Anmeldenummer: PCT/EP2020/070741
(87) Internationale Veröffentlichungsnummer: WO 2021/032399

(56) Entgegenhaltungen:
- EP-A1- 3 292 944
- DE-A1-102008 009 881
- KR-A- 20130 133 349

## Beschreibung

Die Erfindung betrifft eine Werkstückabstützung zur Abstützung von Stangenmaterial in einer Bearbeitungsmaschine, umfassend ein Gestell, eine an dem Gestell um eine gestellfeste Lagerung schwenkbar gelagerte Schwinge und eine an der Schwinge angeordnete Stützablage, ferner umfassend einen Schwingenantrieb, mittels welchem die Schwinge und die Stützablage relativ zu dem Gestell lageveränderbar sind.

Eingangs genannte Werkstückabstützungen sind beispielsweise aus der EP 3 292 944 B1 und aus der CN 206677410 U bekannt. Sie dienen dazu, eine Stützablage in unterschiedlich hohen Abstützpositionen anordnen zu können, um Stangenmaterial (also bezogen auf die Abmessungen ihres Querschnitts längliche Werkstücke, beispielsweise Stäbe, Profile, Rohre, Platten) mit unterschiedlich großen Querschnitten abzustützen und in Höhenrichtung gesehen relativ zu einer Bearbeitungseinrichtung (bspw. einer Trenneinrichtung zum Abtrennen von Stangenabschnitten) positionieren zu können. Eine Stützablage kann außerdem in eine vergleichsweise tiefere Parkposition verbracht werden.

Bei den bekannten Werkstückabstützungen umfasst der Schwingenantrieb einen gestellfesten Fluidzylinder, der über ein Drehgelenk mit der Schwinge verbunden ist, die wiederum die Stützablage trägt. In Abhängigkeit des Hubs des Fluidzylinders ergibt sich eine maximale Höhendifferenz zwischen einer tiefstmöglichen Parkposition und einer höchstmöglichen Abstützposition. Da die für die Bearbeitung eines bestimmten Stangenmaterialloses erforderliche Abstützposition üblicherweise nicht mit der höchstmöglichen Abstützposition korreliert, sind bei den bekannten Werkstückabstützungen lageveränderbare, gestellfeste Anschläge vorgesehen, welche einen Bewegungsweg der Schwinge (und somit der Stützablage) begrenzen.

Die bekannten Werkstückabstützungen haben den Nachteil, dass ihre Einrichtung, also die Anpassung auf Stangenmateriallose mit unterschiedlichen Querschnitten, vergleichsweise aufwändig ist und eine manuelle Handhabung und Verstellung der Anschläge erfordert. Bei einer eingerichteten und im Betrieb befindlichen Werkstückabstützung werden die Fluidzylinder üblicherweise so angesteuert, dass die Schwingengrenzlagen durch mechanischen Aufprall auf die Anschläge erreicht werden, während die Fluidzylinder noch druckbeaufschlagt sind. Dies hat zur Folge, dass vor einer Drucklosschaltung der Fluidzylinder diese gegen die ortsfesten Anschläge arbeiten, wodurch es erforderlich ist, alle Bauteile des Schwingenantriebs relativ robust auszulegen.

Hiervon ausgehend liegt der vorliegenden Erfindung die Aufgabe zugrunde, eine Werkstückabstützung bereitzustellen, welche eine einfache Einrichtung ermöglicht.

Diese Aufgabe wird bei einer Werkstückabstützung der eingangs genannten Art erfindungsgemäß durch eine Werkstückabstützung gemäß Anspruch 1 gelöst. Entsprechend umfasst der Schwingenantrieb ein längenveränderbares Koppelelement und ein Schieberelement, wobei das Koppelelement die Schwinge und das Schieberelement koppelt, wobei das Koppelelement und das Schieberelement mittels eines Drehgelenks miteinander verbunden sind und wobei das Schieberelement längs einer Verschiebeachse bewegbar und lösbar fixierbar an dem Gestell gelagert ist.

Die erfindungsgemäße Werkstückabstützung ermöglicht es, die Lage der Schwinge und somit der Höhe der an der Schwinge angeordneten Stützablage durch einfache Bewegung des Schieberelements längs einer Verschiebeachse zu verändern. Das Schieberelement ist an demselben Gestell gelagert, an welchem auch die Schwinge gelagert ist. Dabei versteht sich, dass das Schieberelement und die Schwinge an unterschiedlichen Gestellteilen des genannten Gestells gelagert seien können.

Das Schieberelement überträgt eine längs der Verschiebeachse gerichtete Bewegung auf ein Koppelelement, von welchem die Bewegung auf die Schwinge (und somit auf die Stützablage) übertragen wird. Im Rahmen der Erfindung ist es bevorzugt, dass die Verschiebeachse einen geradlinigen Verlauf aufweist. Es ist aber auch denkbar, dass die Verschiebeachse einen von einem geradlinigen Verlauf abweichenden Verlauf aufweist.

Durch die Drehverbindung zwischen dem Koppelelement und dem Schieberelement wird eine zuverlässige Bewegungsübertragung zwischen dem Schieberelement und dem Koppelelement ermöglicht.

Besonders bevorzugt ist, wenn das Koppelelement und die Schwinge mittels eines Drehgelenks miteinander verbunden sind, wodurch eine einfache und zuverlässige Übertragung der Bewegung des Koppelelements auf die Schwinge ermöglicht wird. Bei einer bevorzugten Ausführungsform ist eine (Dreh-)Lagerung der Schwinge räumlich zwischen der Stützablage und dem vorstehend genannten Drehgelenk angeordnet.

Es ist ferner bevorzugt, wenn eine Fixiereinrichtung zur lösbaren Fixierung des Schieberelements in einer Position längs der Verschiebeachse vorgesehen ist, sodass die Raumlage des Schieberelements und somit auch eines Gelenkpunkts des Koppelelements lösbar fixierbar ist.

Es ist denkbar, dass das Schieberelement längs der Verschiebeachse manuell gehandhabt wird. Bevorzugt ist es jedoch, wenn ein Antriebsmotor vorgesehen ist, mittels welchem das Schieberelement längs der Verschiebeachse bewegbar ist. Bei einer selbsthemmenden Auslegung des Antriebsmotors und/oder eines zwischen Antriebsmotor und Schieberelement vorgesehenen Getriebes ist es möglich, dass diese eine vorstehend genannte Fixiereinrichtung bildet.

Besonders bevorzugt ist es, wenn eine Mehrzahl von Baugruppen, jeweils umfassend eine Schwinge, eine Stützablage, ein Koppelelement und ein Schieberelement vorgesehen ist, und wenn die Schieberelemente der Baugruppen längs der Verschiebeachse miteinander bewegungsgekoppelt sind. Dies ermöglicht es, durch Steuerung der Bewegung eines Schieberelements gleichzeitig die Bewegung einer Mehrzahl von Schieberelemente zu steuern, und diese Bewegung der jeweiligen Schieberelemente über die jeweiligen Koppelelemente und Schwingen auf die jeweiligen Stützablagen zu übertragen. Dies ist insbesondere bei der Verwendung eines vorstehend genannten Antriebsmotors vorteilhaft, welcher dann vorzugsweise als Antrieb für eine Mehrzahl von Schieberelementen dient.

Im Rahmen der Erfindung ist es möglich, dass das Koppelelement eine unveränderbare Länge aufweist. Besonders bevorzugt ist es jedoch, wenn das Koppelelement längenveränderbar ist, sodass ein Abstand zwischen den Gelenken zu dem Schieberelement einerseits und zu der Schwinge andererseits einstellbar ist. Auf diese Weise ist es möglich, durch Einstellung der Länge des Koppelelements die Höhenlage der an der Schwinge angeordneten Stützablage zu verändern.

Bei einer besonders vorteilhaften Ausführungsform der Erfindung ist das Koppelelement als Fluidzylinder oder als elektromechanischer Zylinder ausgebildet. Bei dem Fluidzylinder kann es sich beispielsweise um einen Hydraulikzylinder, vorzugsweise um einen Pneumatikzylinder handeln. Ein Fluidzylinder oder ein elektromechanischer Zylinder umfasst einen Zylinder und einen längs des Zylinders bewegbaren Kolben, wobei eines der beiden Bauteile "Zylinder und Kolben" gelenkig mit dem Schieberelement verbunden ist und das andere der genannten Bauteile gelenkig mit der Schwinge verbunden ist.

Die Erfindung betrifft auch ein Verfahren zur Einrichtung und zum Betrieb einer vorstehend beschriebenen Werkstückabstützung, welche einen längenveränderbares Koppelelement umfasst. Das Verfahren ist dadurch gekennzeichnet, dass in einer ersten Endlage des Koppelelements das Schieberelement bewegt wird, bis die Stützablage eine erste Sollposition erreicht hat, dass das Schieberelement fixiert wird und dass die Stützablage durch Betätigung des Koppelelements zwischen der ersten Endlage und einer zweiten Endlage zwischen der ersten Sollposition und einer zweiten Sollposition bewegt wird.

Bei der ersten Endlage des Koppelelements handelt es sich beispielsweise um eine Lage, bei welcher ein Kolben vollständig oder teilweise in einen Zylinder eingefahren ist. Die erste Sollposition entspricht beispielsweise einer für ein bestimmtes Stangenmateriallos gewünschten Abstützposition. Mit anderen Worten: Bei zumindest teilweise eingefahrenem Kolben des Koppelelements wird das Schieberelement längs der Verschiebeachse bewegt, bis das an der Schwinge angeordnete Abstützelement eine gewünschte Abstützposition einnimmt. In diesem Zustand wird das Schieberelement fixiert (beispielsweise mittels einer separaten Fixiereinrichtung oder aber dadurch, dass ein Antrieb des Schieberelements selbsthemmend ist). Die genannte zweite Sollposition entspricht beispielsweise einer Parkposition der Stützablage, welche dadurch erreicht wird, dass das Koppelelement betätigt wird, und dabei in die zweite Endlage ausfährt, in welcher der Kolben weiter aus dem Zylinder ausgefahren ist als in der ersten Endlage, beispielsweise maximal aus dem Zylinder ausgefahren ist.

Das erfindungsgemäße Verfahren ermöglicht eine einfache und insbesondere bei Verwendung eines Antriebsmotors schnelle Einstellung einer Abstützposition, welche in Abhängigkeit der Größe eines Querschnitts eines Stangenmaterialloses eingestellt wird. Der Wechsel zwischen der einmal eingestellten Abstützposition und einer Parkposition erfolgt durch Ansteuerung des Koppelelements , das so angesteuert werden kann, dass es jeweils eine von zwei Endlagen einnimmt. Auf dem Weg zwischen den Endlagen ist die Bewegung des Kolbens frei; der Kolben muss also nicht gegen ortsfeste Anschläge arbeiten. Die Endlagen des Koppelelements können beispielsweise durch den maximalen Verfahrweg des Kolbens durch eine Steuerung des Koppelelements und/oder durch an dem Koppelelement vorgesehene, vorzugsweise einstellbare mechanische Wegbegrenzungen des Kolbens vorgegeben sein.

Die Erfindung betrifft ferner ein Verfahren zum Betrieb einer vorstehend beschriebenen Werkstückabstützung, bei welchem das Stangenmaterial während seiner Bearbeitung um seine Längsachse oder um eine zu der Längsachse zumindest im Wesentlichen parallele Rotationsachse gedreht wird und bei welchem die Umfangsfläche (also die Außenfläche) des Stangenmaterials bezogen auf die Längsachse nicht rotationssymmetrisch ist und wobei die Lage der Stützablage relativ zu dem Gestell in Abhängigkeit der Drehlage des Stangenmaterials verändert wird. Mit "nicht rotationssymmetrisch" ist eine Abweichung von einer Rotationssymmetrie im engeren Sinne gemeint. Im engeren Sinne rotationssymmetrisch sind zylindrische und kegelförmige Körper, welche bei Drehung um einen beliebigen Winkel auf sich selbst abbildbar sind. Davon abweichend ist hier also beispielsweise Stangenmaterial gemeint, das im Querschnitt beispielsweise quadratisch oder rechteckförmig ist, dessen Umfangsfläche also entlang des Umfangs gesehen unterschiedliche Abstände zu der Längsachse aufweist (beispielsweise haben bei einem Stangenmaterial mit einem mehreckigen Querschnitt die Eckbereiche des Querschnitts einen größeren Abstand zu der Längsachse als die Zwischenbereiche).

Die Veränderung der Lage der Stützablage relativ zu dem Gestell in Abhängigkeit der Drehlage des Stangenmaterials ermöglicht eine "dynamische" Einstellung der Höhe der Stützablage während der Bearbeitung des sich um seine Längsachse drehenden, nicht im engeren Sinne rotationssymmetrischen Stangenmaterials (bspw. eines Vierkantprofils mit quadratischem oder rechteckigem Querschnitt). Eine solche an die jeweilige Drehlage des Stangenmaterials angepasste Einstellung der Höhe der Stützablage kann durch die Veränderung der Lage des Schieberelements längs der Verschiebeachse und/oder durch Längenänderung des Koppelelements bewirkt werden.

Weitere Merkmale und Vorteile der Erfindung sind Gegenstand der nachfolgenden Beschreibung und der zeichnerischen Darstellung bevorzugter Ausführungsbeispiele.

In der Zeichnung zeigen
- Fig. 1: eine Seitenansicht einer Ausführungsform einer Werkstückabstützung, eingerichtet für ein Stangenmateriallos mit einem kleinen Querschnitt;
- Fig. 2: eine Vorderansicht der Werkstückabstützung gemäß Fig. 1;
- Fig. 3: eine der Fig. 1 entsprechende Seitenansicht; eingerichtet für ein Stangenmateriallos mit einem großen Querschnitt;
- Fig. 4: eine der Fig. 2 entsprechende Vorderansicht der Anordnung gemäß Fig. 3;
- Fig. 5: eine Seitenansicht einer ersten Ausführungsform mit mehreren Werkstückabstützungen;
- Fig. 6: eine Seitenansicht einer weiteren Ausführungsform mit mehreren Werkstückabstützungen; und
- Fig. 7: eine den Figuren 2 und 4 entsprechende Vorderansicht einer weiteren Ausführungsform einer Werkstückabstützung.

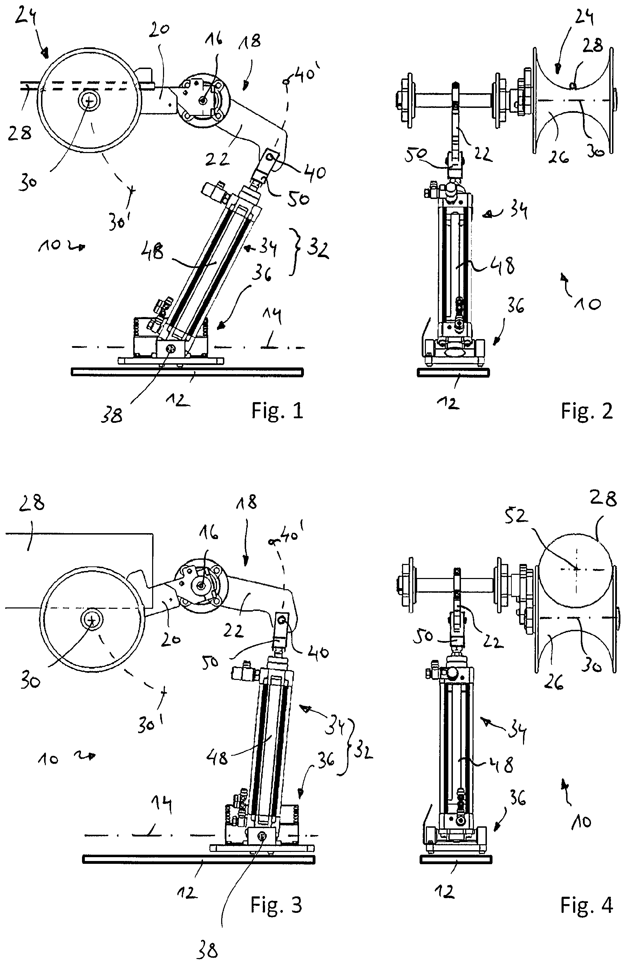

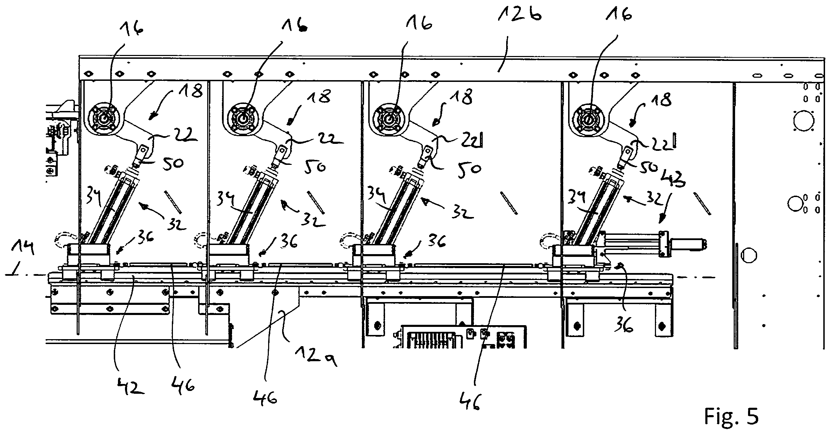

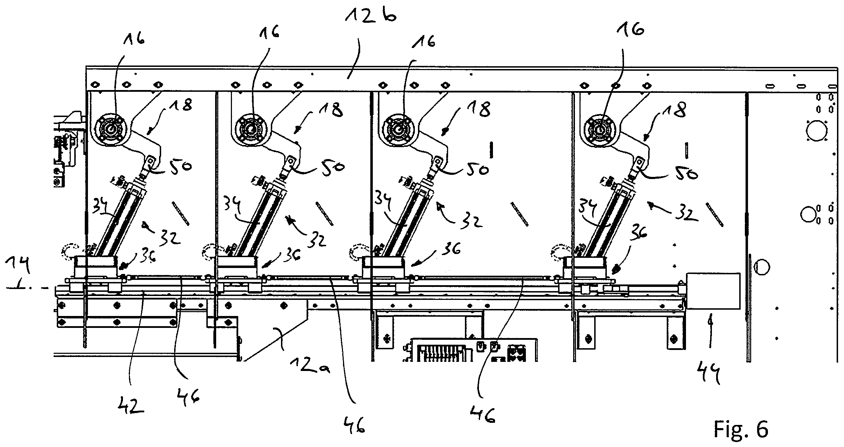

Eine Ausführungsform einer Werkstückabstützung ist in den Figuren 1 bis 4 insgesamt mit dem Bezugszeichen 10 bezeichnet. Die Werkstückabstützung 10 umfasst ein ortsfestes Gestell 12, das in den Figuren 1 bis 4 schematisch dargestellt ist und beispielsweise ein unteres Gestellteil 12a und oberes Gestellteil 12b aufweist (vergleiche Figuren 5 und 6). Das Gestell 12 dient zur Bereitstellung einer Verschiebeachse 14 und zur Bereitstellung einer gestellfesten Lagerung 16 zur schwenkbaren Lagerung einer Schwinge 18.

Die Schwinge 18 weist - bezogen auf die Lagerung 16 - auf voneinander abgewandten Seiten angeordnete Schwingenteile 20 und 22 auf. Der Schwingenteil 20 dient zur Anordnung einer Stützablage 24, welche an sich bekannt ist und optional eine Führungsrolle 26 umfasst. Die Stützablage 24 dient zur Abstützung von Stangenmaterial 28, das in der Zeichnung beispielhaft dargestellt ist, mit einem vergleichsweise kleinen Querschnitt (vergleiche Figuren 1 und 2) und einem vergleichsweise großen Querschnitt (vergleiche Figuren 3 und 4).

Die Führungsrolle 26 ist um eine Stützablagenachse 30 drehbar. Die Lage und somit die Höhe der Stützablagenachse 30 ist mittels eines nachfolgend beschriebenen Schwingenantriebs 32 einstellbar. Der Schwingenantrieb 32 umfasst ein insgesamt mit dem Bezugszeichen 34 bezeichnetes Koppelelement und ein Schieberelement 36. Das Schieberelement 36 ist längs der Verschiebeachse 14 bewegbar an dem Gestell 12 gelagert. Das Koppelelement 34 ist über ein Drehgelenk 38 gelenkig mit dem Schieberelement 36 verbunden. Das Koppelelement 34 ist über ein zu dem Drehgelenk 38 beabstandetes Drehgelenk 40 gelenkig mit der Schwinge 18, insbesondere mit dessen Schwingenteil 22, verbunden.

Das Schieberelement 36 ist längs der Verschiebeachse 14 beispielsweise an einer Führungsschiene 42 gelagert, vergleiche Fig. 5. Um das Schieberelement 36 an der Führungsschiene 42 entlang und somit entlang der Verschiebeachse 14 zu bewegen, ist es möglich, dass ein Antriebsmotor 43 vorgesehen ist, der auf das Schieberelement 36 einwirkt und dieses längs einer gestellfesten Führungsschiene 42 bewegt. Es ist auch möglich, dass ein Antriebsmotor 44 vorgesehen ist, der eine relativ zu dem Gestell 12 bewegbare Führungsschiene 42 längs der Verschiebeachse 14 bewegt und somit ein an der Führungsschiene 42 fixiertes Schieberelement 36 längs der Verschiebeachse 14 bewegt, vergleiche Figur 6.

In der Darstellung gemäß Figuren 5 und 6 sind die Schwingenteile 20 und die daran angeordneten Stützablagen 24 nicht dargestellt; die Anordnung und der Aufbau der Schwingenteile 20 und der Stützablagen 24 entspricht aber dem unter Bezugnahme auf Figuren 1 bis 4 beschriebenen Aufbau.

Eine Veränderung der Position des Schieberelements 36 längs der Verschiebeachse 14 hat eine Drehbewegung des Drehgelenks 40 um das Drehgelenk 38 des Koppelelements 34 zur Folge, wodurch das Schwingenteil 22 um die ortsfeste Lagerung 16 verdreht wird und somit auch das Schwingenteil 20 mit der Stützablage 24. Somit kann durch Veränderung der Position des Schieberelements 36 längs der Verschiebeachse 14 die Stützablagenachse 30 beispielsweise auf einem größeren Höhe (vergleiche Figur 1) oder einer niedrigeren Höhe (vergleiche Figur 3) angeordnet werden, um eine Abstützposition der Stützablage 24 für Stangenmaterial 28 mit einem vergleichsweisen kleinen Querschnitt zu definieren (vergleiche Figuren 1 und 2) oder für ein Stangenmaterial 28 mit einem vergleichsweise großen Querschnitt zu definieren (vergleiche Figuren 3 und 4).

Die vorstehend beschriebene Einstellung einer Abstützposition einer Werkstückabstützung 10 lässt sich vervielfachen, indem mehrere Schwingen 18 vorgesehen sind, welche dasselbe Stangenmaterial 28 längs des Verlaufs des Stangenmaterials 28 gesehen an zueinander versetzten Abstützstellen abstützen. Die Schwingen 18 sind jeweils durch eigene Schwingenantriebe 32 angetrieben, welche jeweils ein Koppelelement 34 und ein Schieberelement 36 umfassen, vergleiche Figuren 5 und 6. Die Schieberelemente 36 sind untereinander verbunden, beispielsweise mittels Verbindungsstangen 46, durch welche die verschiedenen Schieberelemente 36 miteinander verbunden sind. Eine solche Verbindung kann auch dadurch hergestellt sein, dass die Schieberelemente 36 jeweils an der Führungsschiene 42 fixiert sind und dass die Führungsschiene 42 längs der Verschiebeachse 14 relativ zu dem Gestell 12 bewegbar ist.

Somit ist es möglich, mittels nur eines Antriebsmotors 43 oder 44 (vergleiche Figur 5 oder Figur 6) eine Mehrzahl von Schieberelementen 36 längs derselben Verschiebeachse 14 zu bewegen und diese Bewegung über jeweilige Koppelelemente 34 auf jeweilige Schwingen 18 und jeweilige Stützablagen 24 zu übertragen.

Das mindestens eine Koppelelement 34 ist vorzugsweise durch einen Fluidzylinder oder einen elektromechanischen Zylinder bereitgestellt, der einen Zylinder 48 und einen relativ zu dem Zylinder 48 längsverschiebbaren Kolben 50 aufweist. In der Zeichnung sind die beispielsweise durch Fluidzylinder bereitgestellten Koppelelemente 34 in einer eingefahrenen, ersten Endlage dargestellt. Eine Einstellung der Abstützposition in vorstehend beschriebener Weise - also mittels Verschiebung des Schieberelements 36 längs der Verschiebeachse 14 - erfolgt vorzugsweise in der eingefahrenen Endlage der Fluidzylinder. Ist eine gewünschte Abstützposition erreicht, wird das mindestens eine Schieberelement längs der Verschiebeachse fixiert. Ausgehend von der ersten Endlage kann der Kolben 50 eines Fluidzylinders in eine ausgefahrene zweite Endlage verbracht werden, wodurch sich - bei fixierter Lage des Drehgelenks 38 - die Lage des Drehgelenks 40 entlang eines Kreisbogens um die Lagerung 16 herum verändert und in der zweiten Endlage des Kolbens 50 eine Lage einnehmen kann, welche in den Figuren 1 und 3 jeweils mit dem Bezugszeichen 40' bezeichnet ist. Da sich nicht nur das Schwingenteil 22 der Schwinge 18 um deren Lagerung 16 herum bewegt, sondern gleichzeitig auch das Schwingenteil 20, bewirkt ein Ausfahren des Kolbens 50 von der ersten Endlage in die zweite Endlage eine Verlagerung der Stützablagenachse 30 in eine tiefere Lage, welche in den Figuren 1 und 3 jeweils mit dem Bezugszeichen 30' bezeichnet ist. Die Lage 30' entspricht einer Parkposition der Stützablage 24.

Es versteht sich, dass die Kolben 50 der Fluidzylinder unterschiedlicher Schwingenantriebe 32 (vergleiche Figuren 5 und 6) gleichzeitig angesteuert werden können, sodass alle Kolben 50 gleichzeitig in eine eingefahrene erste Endlage verbracht werden können, in der alle Stützablagen 24 eine Abstützposition einnehmen. Die Kolben 50 können gleichzeitig auch in die ausgefahrene zweite Endlage verbracht werden, wodurch sämtliche Stützablagen 24 in ihre jeweilige Parkposition einnehmen.

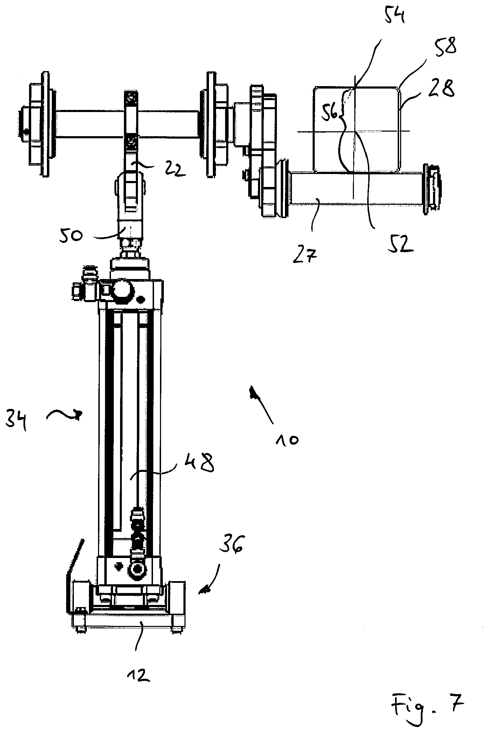

Es ist möglich, dass das Stangenmaterial 28 während seiner Bearbeitung um eine Längsachse 52 (vergleiche Figuren 4 und 7) verdreht wird. Es ist auch möglich, dass das Stangenmaterial 28 nicht im engeren Sinne rotationssymmetrisch ist, sondern beispielsweise im Querschnitt quadratisch oder rechteckförmig (vergleiche Fig. 7). Für eine solches Stangenmaterial 28 kann vorzugsweise eine zylindrische Führungsrolle 27 verwendet werden, auf der sich eine der beispielsweise vier Seiten der Umfangsfläche des Stangenmaterials 28 abstützt.

Eine Verdrehung eines nicht im engeren Sinne rotationssymmetrischen Stangenmaterials 28 um die Längsachse 52 führt dazu, dass die Lage eines Bearbeitungsbereichs der Umfangsfläche des Stangenmaterials 28 in Höhenrichtung variiert. Bei einem im Querschnitt quadratischen Stangenmaterial 28 weist ein Seitenbereich 54 einen Abstand 56 zu der Auflagefläche der Führungsrolle 27 auf, welcher der Länge des Seitenbereichs des Stangenmaterials 28 entspricht. Wird das Stangenmaterial um einen Winkel von 45° um die Längsachse 52 verdreht, vergrößert sich der Abstand eines Eckbereichs 58 zu der Auflagefläche der Führungsrolle 27 um einen Faktor von ca. 1,41 (Quadratwurzel aus 2). Um eine solche Veränderung der Höhenlage der Bearbeitungsbereiche entlang des Umfangs der Außenfläche des Stangenmaterials 28 auszugleichen, ist es möglich, die Höhenlage der Stützablage 24 in Abhängigkeit der Drehlage des Stangenmaterials 28 so zu verändern, dass sich die Höhenlage des Bearbeitungsbereich 54 des Stangenmaterials 28 nicht verändert ("dynamischer Höhenausgleich").

Für ein solches Höhenausgleichsverfahren eignet sich insbesondere eine in Figur 6 dargestellte Ausführungsform, bei welcher ein vergleichsweise leistungsstarker Antriebsmotor 44 vorgesehen ist, der die Lage der Schieberelemente 36 schnell und präzise vorgeben kann, wodurch wiederum eine schnelle und präzise Anpassung der Höhe Stützablage 24 ermöglicht wird. Alternativ oder zusätzlich zu einer Veränderung der Lage der Schieberelemente 36 ist es auch möglich, längenveränderbare Koppelelemente 34 zu verwenden, welche vorzugsweise auch in zwischen den Endlagen vorgesehenen Zwischenlagen druck- und zugstabil sind (in diesem Zusammenhang sind elektromechanische Zylinder bevorzugt).

## Patentansprüche

1. Werkstückabstützung (10) zur Abstützung von Stangenmaterial (28) in einer Bearbeitungsmaschine, umfassend ein Gestell (12), eine an dem Gestell (12) um eine gestellfeste Lagerung (16) schwenkbar gelagerte Schwinge (18) und eine an der Schwinge (18) angeordnete Stützablage (24), ferner umfassend einen Schwingenantrieb (32), mittels welchem die Schwinge (18) und die Stützablage (24) relativ zu dem Gestell (12) um die gestellfeste Lagerung (16) schwenkbar sind, **dadurch gekennzeichnet, dass** der Schwingenantrieb (32) ein längenveränderbares Koppelelement (34) und ein Schieberelement (36) umfasst, wobei das Koppelelement (34) die Schwinge (18) und das Schieberelement (36) koppelt, wobei das Koppelelement (34) und das Schieberelement (36) mittels eines Drehgelenks (38) miteinander verbunden sind und wobei das Schieberelement (36) längs einer Verschiebeachse (14) bewegbar und lösbar fixierbar an dem Gestell (12) gelagert ist.

2. Werkstückabstützung (10) nach Anspruch 1, **dadurch gekennzeichnet, dass** das Koppelelement (34) und die Schwinge (18) mittels eines Drehgelenks (40) miteinander verbunden sind.

3. Werkstückabstützung (10) nach einem der voranstehenden Ansprüche, **dadurch gekennzeichnet, dass** eine Fixiereinrichtung zur lösbaren Fixierung des Schieberelements (36) in einer Position längs der Verschiebeachse (14) vorgesehen ist.

4. Werkstückabstützung (10) nach einem der voranstehenden Ansprüche, **dadurch gekennzeichnet, dass** ein Antriebsmotor (43, 44) vorgesehen ist, mittels welchem das Schieberelement (36) längs der Verschiebeachse (14) bewegbar ist.

5. Werkstückabstützung (10) nach einem der voranstehenden Ansprüche, **dadurch gekennzeichnet, dass** eine Mehrzahl von Baugruppen, jeweils umfassend eine Schwinge (18), eine Stützablage (24), ein Koppelelement (34) und ein Schieberelement (36), vorgesehen ist, und dass die Schieberelemente (36) der Baugruppen längs der Verschiebeachse (14) miteinander bewegungsgekoppelt sind.

6. Werkstückabstützung (10) nach einem der voranstehenden Ansprüche, **dadurch gekennzeichnet, dass** das Koppelelement (34) als Fluidzylinder oder als elektromechanischer Zylinder ausgebildet ist.

7. Verfahren zur Einrichtung und zum Betrieb einer Werkstückabstützung (10) nach einem der Ansprüche 1 bis 6, **dadurch gekennzeichnet, dass** in einer ersten Endlage des Koppelelements (34) das Schieberelement (36) bewegt wird, bis die Stützablage (24) eine erste Sollposition erreicht hat, dass das Schieberelement (36) fixiert wird und dass die Stützablage (24) durch Betätigung des Koppelelements (34) zwischen der ersten Endlage und einer zweiten Endlage zwischen der ersten Sollposition und einer zweiten Sollposition bewegt wird.

8. Verfahren zum Betrieb einer Werkstückabstützung (10) nach einem der Ansprüche 1 bis 6, **dadurch gekennzeichnet, dass** das Stangenmaterial (28) während seiner Bearbeitung um seine Längsachse (52) oder um eine zu der Längsachse (52) zumindest im Wesentlichen parallele Rotationsachse gedreht wird, dass die Umfangsfläche des Stangenmaterials (28) bezogen auf die Längsachse (52) nicht rotationssymmetrisch ist und dass die Lage der Stützablage (24) relativ zu dem Gestell (12) in Abhängigkeit der Drehlage des Stangenmaterials (28) verändert wird.

## Claims

1. A workpiece support (10) for supporting rod material (28) in a processing machine, comprising a frame (12), a swing arm (18) which is mounted on the frame (12) pivotably about a bearing (16) that is fixed to the frame, and a support rest (24) arranged on the swing arm (18), further comprising a swing arm drive (32), by means of which the swing arm (18) and the support rest (24) can be pivoted relative to the frame (12) about the bearing (16) that is fixed to the frame, **characterized in that** the swing arm drive (32) comprises a length-adjustable coupling element (34) and a slide element (36), wherein the coupling element (34) couples the swing arm (18) and the slide element (36), wherein the coupling element (34) and the slide element (36) are connected together by means of a rotating joint (38) and wherein the slide element (36) is movable along a displacement axis (14) and is mounted to the frame (12) in a detachably fixable manner.

2. The workpiece support (10) according to claim 1, **characterized in that** the coupling element (34) and the swing arm (18) are connected together by means of a rotating joint (40).

3. The workpiece support (10) according to one of the preceding claims, **characterized in that** a fixing device is provided for detachably fixing the slide element (36) in a position along the displacement axis (14).

4. The workpiece support (10) according to one of the preceding claims, **characterized in that** a drive motor (43, 44) is provided, by means of which the slide element (36) can be moved along the displacement axis (14).

5. The workpiece support (10) according to one of the preceding claims, **characterized in that** a plurality of assemblies, each of which comprises a swing arm (18), a support rest (24), a coupling element (34) and a slide element (36), is provided, and that the slide elements (36) of the assemblies are coupled together movably along the displacement axis (14).

6. The workpiece support (10) according to one of the preceding claims, **characterized in that** the coupling element (34) is designed as a fluid cylinder or an electromechanical cylinder.

7. A method for configuring and operating a workpiece support (10) according to one of claims 1 to 6, **characterized in that** in a first end position of the coupling element (34) the slide element (36) is moved until the support rest (24) has reached a target position, that the slide element (36) is fixed and that the support rest (24) is moved between the first end position and a second end position between the first target position and a second target position by actuating the coupling element (34).

8. A method for operating a workpiece support (10) according to one of claims 1 to 6, **characterized in that** as it is being processed, the rod material (28) is rotated about its longitudinal axis (52) or about an axis of rotation which is at least substantially parallel to the longitudinal axis (52), that the peripheral surface of the rod material (28) is not rotationally symmetrical relative to the longitudinal axis (52) and that the position of the support rest (24) relative to the frame (12) is changed depending on the rotational position of the rod material (28).

## Revendications

1. Support de pièce (10) pour le support de barres (28) dans une machine d'usinage, comprenant un bâti (12), un bras oscillant (18) monté sur le bâti (12) de manière à pouvoir pivoter autour d'un palier (16) solidaire du bâti, et une tablette d'appui (24) disposée sur le bras oscillant (18), comprenant en outre un entraînement de bras oscillant (32), au moyen duquel le bras oscillant (18) et la tablette d'appui (24) peuvent pivoter par rapport au bâti (12) autour du palier (16) solidaire du bâti, **caractérisé en ce que** l'entraînement de bras oscillant (32) comprend un élément de couplage (34) de longueur variable et un élément coulissant (36), l'élément de couplage (34) couplant le bras oscillant (18) et l'élément coulissant (36), l'élément de couplage (34) et l'élément coulissant (36) étant reliés l'un à l'autre au moyen d'une articulation rotative (38) et l'élément coulissant (36) étant monté sur le bâti (12) de manière mobile le long d'un axe de coulissement (14) et de manière à pouvoir se fixer de manière amovible.

2. Support de pièce (10) selon la revendication 1, **caractérisé en ce que** l'élément de couplage (34) et le bras oscillant (18) sont reliés entre eux au moyen d'une articulation rotative (40).

3. Support de pièce (10) selon l'une des revendications précédentes, **caractérisé en ce qu'**un dispositif de fixation est prévu pour la fixation amovible de l'élément coulissant (36) dans une position le long de l'axe de coulissement (14).

4. Support de pièce (10) selon l'une des revendications précédentes, **caractérisé en ce qu'**il est prévu un moteur d'entraînement (43, 44) au moyen duquel l'élément coulissant (36) peut être déplacé le long de l'axe de coulissement (14).

5. Support de pièce (10) selon l'une des revendications précédentes, **caractérisé en ce qu'**il est prévu une pluralité d'assemblages comprenant chacun un bras oscillant (18), une tablette d'appui (24), un élément de couplage (34) et un élément coulissant (36), et **en ce que** les éléments coulissants (36) des assemblages sont couplés entre eux en mouvement le long de l'axe de coulissement (14).

6. Support de pièce (10) selon l'une des revendications précédentes, **caractérisé en ce que** l'élément de couplage (34) est conçu comme un cylindre à fluide ou comme un cylindre électromécanique.

7. Procédé de configuration et de fonctionnement d'un support de pièce (10) selon l'une des revendications 1 à 6, **caractérisé en ce que**, dans une première position finale de l'élément de couplage (34), l'élément coulissant (36) est déplacé jusqu'à ce que la tablette d'appui (24) ait atteint une première position de consigne, **en ce que** l'élément coulissant (36) se fixe et **en ce que** la tablette d'appui (24) est déplacée entre la première position finale et une seconde position finale par actionnement de l'élément de couplage (34) entre la première position de consigne et une seconde position de consigne.

8. Procédé de fonctionnement d'un support de pièce (10) selon l'une des revendications 1 à 6, **caractérisé en ce que** les barres (28) sont tournées pendant leur usinage autour de leur axe longitudinal (52) ou autour d'un axe de rotation au moins essentiellement parallèle à l'axe longitudinal (52), **en ce que** la surface périphérique des barres (28) n'est pas symétrique en rotation par rapport à l'axe longitudinal (52) et **en ce que** la position de la tablette d'appui (24) par rapport au bâti (12) est modifiée en fonction de la position de rotation des barres (28).
